# EUROPÄISCHE PATENTANMELDUNG

(11) **EP 0 953 426 A2**
(43) Veröffentlichungstag der Anmeldung: **03.11.1999**
(21) Anmeldenummer: 99890142.5
(22) Anmeldetag: 30.04.1999
(51) Int. Cl.: B29C 45/73

(54) **Temperierkreislauf für Spritzgussformen**

(30) Priorität: 30.04.1998 AT 73098
(71) Anmelder: WITTMANN KUNSTSTOFFGERÄTE Ges.m.b.H., A-1220 Wien (AT)
(72) Erfinder: Lichtenberger, Walter, 1220 Wien (AT)
(74) Vertreter: Hehenberger, Reinhard, Dipl.-Ing.

(57) **Zusammenfassung**

Ein Temperierkreislauf für Spritzgußformen weist einen Werkzeugkreis (1), einen daran angeschlossenen Kühlkreis (20) sowie einen separat an den Werkzeugkreis (1) angeschlossenen Heizkreis (19) auf. Durch die Trennung von Heizkreis (19) und Kühlkreis (20) können der Heizkreis (19) und der Kühlkreis (20) jeweils für sich optimal ausgelegt werden, wobei es gleichzeitig auch möglich ist, im Heizkreis (19) die Abwärme von anderen Geräten, beispielsweise einem Ölkühler oder des Einzugsbereiches der Spritzgießmaschine zu verwenden.

## Beschreibung

Die Erfindung betrifft einen Temperierkreislauf für Kunststoffverarbeitungsmaschinen, insbesondere Spritzgußformen mit einem Werkzeugkreis und einem Heiz- bzw. Kühlkreis, über den der Werkzeugkreis nach Bedarf mit Heiz- oder Kühlmedium gespeist wird.

Um beim Spritzgießen Produkte mit gleichbleibenden Qualitätseigenschaften zu erhalten, ist es erforderlich, die Formtemperatur möglichst genau auf einem vorgegebenen Wert zu halten. Dies bedingt u.a., daß, bevor der eigentliche Spritzgießvorgang begonnen werden kann, die Form zunächst auf eine erforderliche Formtemperatur erwärmt wird, wonach es während des Herstellungszyklus erforderlich ist, die Form zu kühlen. Üblicherweise erfolgt dies mit Hilfe eines Aggregates, das an den Werkzeugkreis angeschlossen ist und nach Bedarf erwärmtes oder gekühltes Medium dem Werkzeugkreis zuführt. Dieses Aggregat weist dazu eine Heiz- und eine Kühleinrichtung auf, um das umlaufende Medium nach Bedarf zu beheizen oder zu kühlen. Nachteilig dabei ist allerdings, daß diese Aggregate entweder nur eine relativ geringe Kühlleistung aufweisen, was sich auf die Zykluszeiten des Fertigungsprozesses nachteilig auswirkt, oder daß ein sehr großes Kühlaggregat erforderlich ist, was sich auf die Anlagekosten nachteilig auswirkt.

Der Erfindung liegt daher die Aufgabe zugrunde, einen gattungsgemäßen Temperierkreislauf zur Verfügung zu stellen, bei dem das Temperieren der Spritzgußform sehr schnell und ökonomisch durchgeführt werden kann.

Gelöst wird diese Aufgabe bei einem gattungsgemäßen Temperierkreislauf dadurch, daß an den Werkzeugkreis sowohl ein Heizkreis als auch ein Kühlkreis angeschlossen sind.

Bei der Erfindung wird der Weg eingeschlagen, nicht einen einzigen Heiz- bzw. Kühlkreis vorzusehen, über den der Werkzeugkreis nach Bedarf mit Heiz- oder Kühlmedium gespeist wird, sondern für Heiz- und Kühlmedium getrennte Kreise zu verwenden, die an den Werkzeugkreis angeschlossen sind. Dies bringt den Vorteil mit sich, daß sowohl der Heizkreis als auch der Kühlkreis auf den jeweiligen Zweck optimal abgestimmt sein kann und insbesondere für den Kühlkreis mit einfachen technischen Mitteln ein hoher Durchsatz an Kühlmedium mit optimaler Temperatur möglich ist, was sich auf die Zykluszeiten bei der Produktion sehr vorteilhaft auswirkt.

Hinsichtlich des Heizkreises bietet sich dabei auch die Möglichkeit, diesen entweder über ein externes Heizgerät oder über die Abwärme z.B. eines Ölkühlers oder der Einzugszone der Spritzgußmaschine zu beheizen.

Ein Zulauf des Kühlkreises und ein Zulauf des Heizkreises in den Werkzeugkreis können über Ventile absperrbar bzw. steuerbar sein, wobei dies bevorzugt auf Grund von in der Spritzgußform der Spritzgußmaschine mit Temperaturfühlern ermittelten Temperaturen erfolgt.

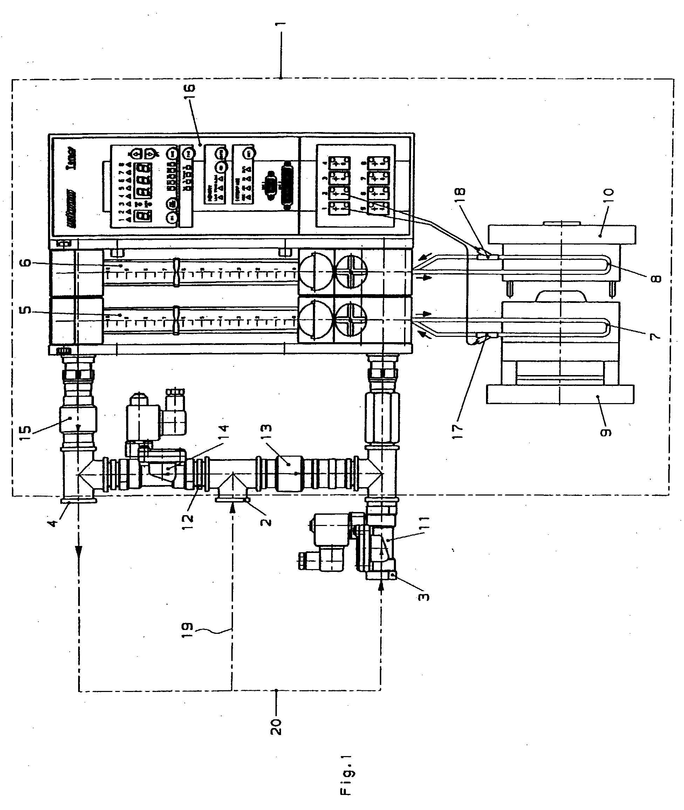

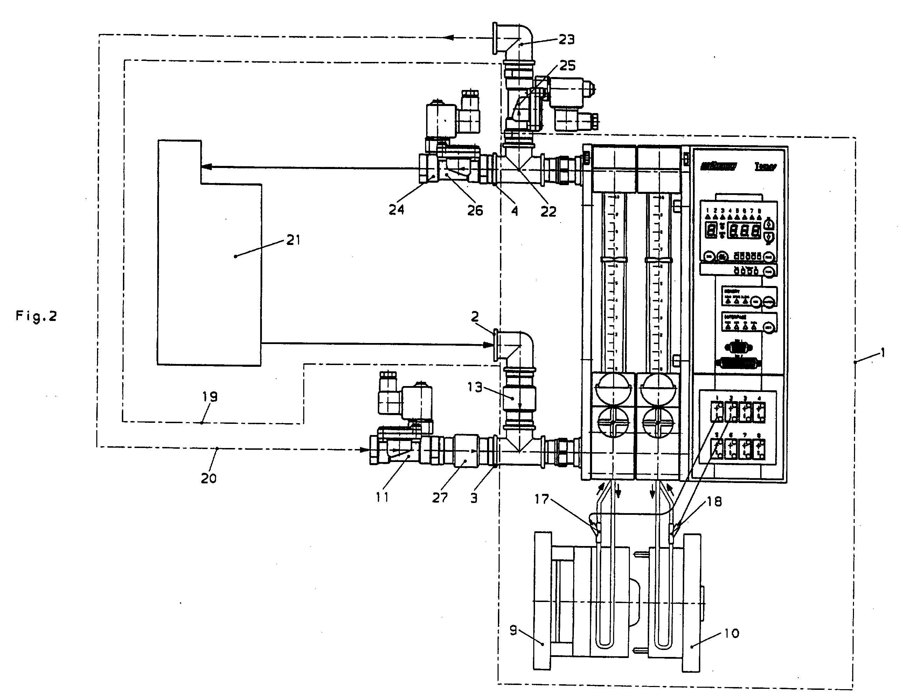

Weitere Merkmale und Vorteile der Erfindung ergeben sich aus der nachfolgenden Beschreibung von zwei Ausführungsbeispielen der Erfindung, die in den Fig. 1 und 2 dargestellt sind.

In Fig. 1 ist schematisch eine erste Ausführungsform eines erfindungsgemäßen Temperierkreislaufes dargestellt, bei der mit 1 der Werkzeugkreis bezeichnet ist. Der Werkzeugkreis 1 weist einen Anschluß 2 für einen Heizkreis 19 und einen Anschluß 3 für einen Kühlkreis 20 sowie einen Ablauf 4, der sowohl dem Heizkreis 19 als auch dem Kühlkreis 20 zugeordnet ist, auf. Der Heizkreis 19 kann z.B. in den Kühlkreis eines Ölkühlers oder der Einzugszone der Spritzgießmaschine integriert sein und deren Abwärme nutzen. In diesem Fall kann nach dem Ablauf 4 eine in den Zeichnungen nicht dargestellte Kältemaschine sowohl den Ölkühler oder die Einzugszone der Spritzgießmaschine und somit indirekt den Heizkreis 19 als auch den Kühlkreis 20 mit Kühlmedium versorgen.

Der Werkzeugkreis 1 führt von den Zuläufen 2, 3 über Schaurohre 5, 6 zur optischen Kontrolle der Durchflußmenge über Kanäle 7, 8 in den Werkzeugformteilen 9, 10 zum Ablauf 4 aus dem Werkzeugkreis 1. Die Zufuhr von Kühlmedium aus dem Kühlkreis 20 über den Zulauf 3 ist mit Hilfe eines Magnetventiles 11 steuerbar. Der Ablauf 4 und der Zulauf 3 des Werkzeugkreises 1 sind über ein Verbindungsrohr 12 miteinander verbunden, in welches der Zulauf 2 des Heizkreises 19 mündet. Zwischen dem Zulauf 2 des Heizkreises 19 und dem Zulauf 3 des Kühlkreises 20 ist im Verbindungsrohr 12 ein Rückschlagventil 13 angeordnet, das in Richtung zum Zulauf 3 hin durchströmt werden kann und somit ein Fließen von Kühlmedium zum Zulauf 2 hin verhindert. Zwischen dem Zulauf 2 und dem Ablauf 4 ist im Verbindungsrohr 12 ein Magnetventil 14 angeordnet, das gesteuert geöffnet und geschlossen werden kann. Schließlich befindet sich vor dem Ablauf 4 des Werkzeugkreises (von der Seite des Formwerkzeuges 9, 10 betrachtet) noch ein Rückschlagventil 15, das zum Ablauf 4 hin durchströmt werden kann.

Die Steuerung der Ventile erfolgt mit Hilfe einer Steuerung 16, die in Fig. 1 nur allgemein dargestellt ist, wobei u.a. die zwei folgenden Steuerungsarten möglich sind. Zum einen kann die Steuerung über externe Signale oder eine Datenschnittstelle (eventuell von der Spritzgießmaschine) über "MUSS-Einschaltzeiten" oder "NULL-Einschaltzeiten" von Heizung und/oder Kühlung vorgegeben sein. Auf der anderen Seite ist es aber auch möglich, die Heizung und/oder Kühlung mit dem Fertigungsprozeß der Maschine zu synchronisieren.

Idealerweise werden dabei die Daten von Temperaturfühlern 17, 18 herangezogen, die am jeweiligen Ablauf der Kanäle 7, 8 aus den Werkzeugformteilen 9, 10 angeordnet sind und eine direkte Kontrolle der in den Werkzeugformen 9, 10 herrschenden Temperatur ermöglichen.

Im praktischen Betrieb wird bei zunächst kalten Werkzeugformen 9, 10 das Magnetventil 11 im Zulauf 3 des Kühlkreises 20 geschlossen sein, und Heizmedium über den Zulauf 2 zugeführt werden, indem das Magnetventil 14 geschlossen ist und das Rückschlagventil 13 durchströmt wird. Nachdem die Temperaturfühler 17, 18 eine ausreichende Erwärmung der Werkzeugformteile 9, 10 festgestellt haben, kann der Produktionsprozeß gestartet werden, wobei gleichzeitig das Magnetventil 14 geöffnet und das Heizmedium über den so geöffneten Bypaß über den Ablauf 4 aus dem Werkzeugkreis 1 abgeleitet wird. Das Rückschlagventil 13 weist dabei eine so große Schließkraft auf, daß es vom Druck des Heizmediums nicht geöffnet wird.

Wenn die Temperatur der Werkzeugformteile 9, 10 einen bestimmten Wert überschreitet oder gegebenenfalls auch unmittelbar nach dem Beenden des Zuführens von Heizmedium aus dem Heizkreis 19 wird das Magnetventil 11 geöffnet, wodurch Kühlmittel durch den Zulauf 3 aus dem Kühlkreis 19 in den Werkzeugkreis 1 zugeführt wird und die Werkzeugformteile 9, 10 gekühlt werden. Mittels der Temperaturfühler 17, 18 wird dabei ständig überprüft, ob die Temperatur der Werkzeugform 9, 10 innerhalb eines vorgegebenen Bereiches liegt, wobei die Zufuhr von Kühlmittel aus dem Kühlkreis, gegebenenfalls intermittierend, gedrosselt oder erhöht werden kann.

Die in Fig. 2 dargestellte Ausführungsform des erfindungsgemäßen Temperierkreislaufes unterscheidet sich von der in Fig. 1 dargestellten dadurch, daß am Auslaß 4 des Werkzeugkreises 1 eine Abzweigung bzw. Aufteilung in den Heizkreis 19 und den Kühlkreis 20 mit einer in der Zeichnung nicht dargestellten Kältemaschine erfolgt und der durch das Verbindungsrohr 12 und das Magnetventil 14 gebildete Bypaß zwischen Zulauf 2 und Ablauf 4 entfällt. Grund hierfür ist, daß als Wärmequelle für den Heizkreis 19 ein externes Heizgerät 21 herangezogen wird, so daß der Heizkreis 19 nur zum Aufheizen der Werkzeugformteile 9, 10 in Betrieb ist, wogegen der Heizkreis bei der in Fig. 1 dargestellten Ausführungsform in den Kühlkreislauf eines Ölkühlers oder der Einzugszone der Spritzgußmaschine integriert ist und folglich eine dort erforderliche permanente Kühlung gewährleistet sein muß.

Zur Trennung des Heizkreises 19 vom Kühlkreis 20 ist in Fig. 2 dem Auslaß 4 daher ein T-Stück 22 zugeordnet, dessen ein Ablauf 23 zum Kühlkreis 20 und dessen anderer Ablauf 24 zum Heizkreis 19 führt. In beiden Abläufen 23 und 24 ist je ein Magnetventil 25, 26 eingebaut, die je nachdem, ob gerade der Heizkreis 19 oder der Kühlkreis 20 in Betrieb ist, geöffnet bzw. geschlossen sind. In Strömungsrichtung nach dem Magnetventil 16 ist vor dem Anschluß 3 noch ein Rückschlagventil 27 angeordnet, um ein Rückströmen von Heizmedium in den Kühlkreis 20 zu verhindern.

Die Aufheizphase kann bei beiden Ausführungsformen durch ein externes Signal oder durch Temperaturmessung gestartet werden, wobei in beiden Fällen eine sehr hohe Heizleistung ohne hohen technischen Aufwand gegeben ist. Eine Aufwärmphase ist entweder am erstmaligen Beginn eines Produktionsprozesses oder gegebenenfalls auch während Unterbrechungen in der Produktion erforderlich, um ein zu starkes Abkühlen der Form 9, 10 zu verhindern.

Während der automatischen Produktion ist üblicherweise nur das Abführen von Wärme notwendig. Die Kühlphase kann dabei ebenfalls durch ein externes Signal oder durch Temperaturmessung gestartet werden. Die beim erfindungsgemäßen Kühlkreislauf mit einfachen Mitteln gegebene, sehr hohe Kühlleistung gewährleistet dabei in Verbindung mit der permanenten Temperaturmessung durch die Temperaturfühler 17, 18 sehr kurze Taktzeiten, was z.B. bei der Herstellung von CD-Rohlingen, für deren Produktionseinsatz der erfindungsgemäße Temperierkreislauf besonders geeignet ist, sehr wesentlich ist.

Zusammenfassend kann ein bevorzugtes Ausführungsbeispiel des erfindungsgemäßen Temperierkreislaufes für Spritzgußformen wie folgt beschrieben werden:

Ein Temperierkreislauf für Spritzgußformen weist einen Werkzeugkreis 1, einen daran angeschlossenen Kühlkreis 20 sowie einen separat an den Werkzeugkreis 1 angeschlossenen Heizkreis 19 auf. Durch die Trennung von Heizkreis 19 und Kühlkreis 20 können der Heizkreis 19 und der Kühlkreis 20 jeweils für sich optimal ausgelegt werden, wobei es gleichzeitig auch möglich ist, im Heizkreis 19 die Abwärme von anderen Geräten, beispielsweise einem Ölkühler oder des Einzugsbereiches der Spritzgießmaschine zu verwenden.

## Patentansprüche

1. Temperierkreislauf für Kunststoffverarbeitungsmaschinen, insbesondere Spritzgußformen mit einem Werkzeugkreis und einem Heiz- bzw. Kühlkreis, über den der Werkzeugkreis nach Bedarf mit Heiz- oder Kühlmedium gespeist wird, dadurch gekennzeichnet, daß an den Werkzeugkreis (1) sowohl ein Heizkreis (19) als auch ein Kühlkreis (20) angeschlossen sind.

2. Temperierkreislauf nach Anspruch 1, dadurch gekennzeichnet, daß ein Zulauf (3) des Kühlkreises (20) in den Werkzeugkreis (1) über ein Ventil (11) absperrbar ist.

3. Temperierkreislauf nach Anspruch 1 oder 2, dadurch gekennzeichnet, daß ein Zulauf (2) des Heizkreises (19) in den Werkzeugkreis (1) über ein Ventil absperrbar ist.

4. Temperierkreislauf nach Anspruch 1 oder 2, dadurch gekennzeichnet, daß der Heizkreis (19) über ein Ventil (14) direkt mit einem Ablauf (4) des Werkzeugkreises (1) verbunden ist.

5. Temperierkreislauf nach einem der Ansprüche 1 bis 4, dadurch gekennzeichnet, daß zwischen dem Zulauf (2) des Heizkreises (19) und dem Zulauf (3) des Kühlkreises (20) in den Werkzeugkreis (1) ein in Richtung vom Zulauf (2) des Heizkreises (19) zum Zulauf (3) des Kühlkreises (20) öffnendes Rückschlagventil (13) vorgesehen ist.

6. Temperierkreislauf nach einem der Ansprüche 1 bis 5, dadurch gekennzeichnet, daß der Heizkreis (19) und der Kühlkreis (20) einen gemeinsamen Ablauf (4) aus dem Werkzeugkreis (1) aufweisen.

7. Temperierkreislauf nach einem der Ansprüche 1 bis 5, dadurch gekennzeichnet, daß der Ablauf (4) des Werkzeugkreises (1) eine ventilgesteuerte Abzweigung (22, 25, 26) zum Heizkreis (19) und zum Kühlkreis (20) aufweist.

8. Temperierkreislauf nach einem der Ansprüche 4 bis 6, dadurch gekennzeichnet, daß der Heizkreis (19) mit dem Kühler eines Antriebsaggregates oder der Einzugszone der Spritzgießmaschine verbunden ist.

9. Temperierkreislauf nach Anspruch 7, dadurch gekennzeichnet, daß der Heizkreis (19) mit einem Heizgerät (21) verbunden ist.

10. Temperierkreislauf nach einem der Ansprüche 1 bis 9, dadurch gekennzeichnet, daß in der Spritzgußform (9, 10) der Spritzgießmaschine Temperaturfühler (17, 18) vorgesehen sind.

11. Temperierkreislauf nach Anspruch 10, dadurch gekennzeichnet, daß die Temperaturfühler (17, 18) in dem Ablauf des Werkzeugkreises (1) aus der Spritzgußform (9, 10) zugeordnet sind.
